# EUROPEAN PATENT SPECIFICATION

(11) **EP 0 374 171 B1**
(45) Date of publication and mention of the grant of the patent: **26.10.1994**
(21) Application number: 88907465.4
(22) Date of filing: 22.07.1988
(51) Int. Cl.: G02B 5/08, G02B 7/18, A45D 27/22

(54) **SELF-SUPPORTED, ADJUSTABLE, CONDENSATION-FREE SHOWER MIRROR**
FREITRAGENDER, JUSTIERBARER, KONDENSATIONSFREIER DUSCHENSPIEGEL
MIROIR DE DOUCHE AUTOPORTE, REGLABLE, ANTICONDENSATION

(30) Priority: 22.07.1987 US 76494
(43) Date of publication of application: 27.06.1990
(73) Proprietor: SHOWERTEK, INC., Napa, CA 94558 (US); CHRISTIANSON, Thomas R., Palo Alto, CA 94301 (US)
(72) Inventor: SHOWERTEK, INC., Napa, CA 94558 (US); CHRISTIANSON, Thomas R., Palo Alto, CA 94301 (US)
(74) Representative: Lerwill, John
(86) International application number: US8802501
(87) International publication number: WO8900706

(56) References cited:
- JP-A- 5 232 753
- US-A- 3 530 275
- US-A- 3 594 063
- US-A- 3 708 218
- US-A- 4 072 397
- US-A- 4 150 869
- US-A- 4 327 961
- US-A- 4 556 298
- US-A- 4 557 003
- US-A- 4 558 929
- US-A- 4 655 559
- US-A- 4 733 468

## Description

### Background--Field Of The Invention

Generally this invention relates to the field of anti-condensation devices for preventing the formation of steam, fog, or condensation on glass or a similar surface; specifically to a condensation-free mirror which is self supporting in a shower and is capable of being manually adjusted into different positions during use.

### Background--Prior Art

Some prior-art mirrors which prevent or remove steam, fog, condensation, or other vision-obscuring moisture in the shower use a blower or baffle system to pass warm air over a glass surface in order to accelerate the evaporation of any fog or steam which is formed on the surface of the glass. Such air systems are not efficient and take a relatively long period of time (minutes rather than seconds) to remove the condensation. Also the moisture usually is removed from one edge of the glass, rather than all at once.

Exhaust fans are becoming fairly standard items for bathrooms, and in some instances they are supplemented by a separate blower unit for directing heated air across the surface of a bathroom mirror, e.g., as shown in U.S. patent 4,037,079 to J. Armbruster (1977) for a bathroom mirror defogger. However users could still use a separate shower mirror since men can obtain a closer, more comfortable shave at the time their beards are softened by the steam and hot water of a shower, while women's skin treatments are best applied in a steamy environment as well as in front of a mirror.

Resistance wires imbedded in a sheet of plexiglass have been used as an alternative to blowers, but such devices can be dangerous when used in the vicinity of water. Also, the need for electrical power to activate the resistance wires requires the use of batteries or the like.

Water-heated shower mirrors have been proposed as shown in US 4557003. This document discloses a shower mirror wherein the mirror is mounted in a housing which forms a plenum behind the mirror. All the shower water flows through the plenum to heat the back of the mirror and prevent fogging. The water is conducted to and from the mirror by a rigid arm which carries the mirror and includes two rotation joints to allow the mirror position to be adjusted. Such mirrors are awkward to install, complicated and hence expensive, and unreliable in operation.

Anti-fogging mirrors have also been proposed, but these do not operate reliably and require repeated applications of chemical anti-fog coatings.

### Objects and Advantages

One aim of the invention is thus to overcome the disadvantages of the aforementioned prior-art mirrors and to provide a safe, efficient, and trouble-free method of removing or preventing the accumulation of steam from or on a mirror installed in a shower stall. A related aim is to provide devices which are part of a permanent shower installation, as well as to provide an accessory device which can be quickly installed without the need of specialised tools in any existing shower.

According to the present invention there is provided a mirror assembly for use in a shower enclosure having a supply pipe connected to a water-dispensing showerhead comprising:
a mirror;
a frame having a back plate for holding said mirror and defining a partially enclosed chamber adjacent the rear surface of said mirror, an elongated arm, one end of which is attached to said frame, the other end of which includes attachment means for attaching said arm to said showerhead supply pipe, said arm carrying the frame and the mirror and being adjustable to vary the position of the mirror,
and supply means, comprising a central passage in said elongated arm, for supplying heated water from said showerhead pipe to said enclosed chamber and directing said water against the rear surface of said mirror so as to heat said mirror and thereby prevent it from fogging, characterised in that said arm is flexible, and bendable, yet will remain stably in any position to which it is bent, such that when said other end of said arm is attached to said showerhead supply pipe, said mirror can be positioned stably in any position within a range of positions with respect to said showerhead, said supply means further comprises a flexible inner tube positioned in said central passage, and said frame comprises drain means for allowing heated water to drain away from said mirror by gravity after heating said mirror.

An advantage of the present invention is that it provides a shower mirror with a flexible, yet stable arm, which can accommodate high pressure water without undesirable leakage and which will not break in case of trauma.

A further advantage is that it has a minimal number of parts which are inexpensive to manufacture, easy to install, and do not provide a safety hazard to the user.

These and other advantages will be apparent to those skilled in the art from a review of the accompanying drawings and the following detailed description.

### Drawing Figs.

Fig. 1 is a perspective view showing a shower mirror which is hingedly mounted on a shower wall, and has a spray-type diffuser bar mounted behind the upper edge of the mirror.

Fig. 2 is a sectional view taken along line 2--2 in Fig. 1, looking upwardly toward the diffuser bar.

Fig. 3 is a sectional view looking downwardly on the version of Fig. 1, with the mirror in closed position against the wall.

Fig. 4 is a perspective view of another version of a shower mirror which is hingedly mounted through a single-flex joint to a shower wall, and has a partially enclosed temperature control compartment fed from a top inlet pipe and drained through bottom gravity flow holes.

Fig. 5 is a partial sectional view taken along the line 5--5 in Fig. 4.

Fig. 6 is a perspective view of a different version of a shower mirror which is rotatably mounted on a support arm connected to the showerhead pipe and which has a separate supply hose from the showerhead pipe.

Fig. 7 is an additional version which is rotatably mounted on a support arm connected to the shower wall and which has a diffuser hose extending around the entire periphery of the mirror.

Fig. 8 is a sectional view taken along the line 8--8 in Fig. 7.

Fig. 9 is a schematic drawing showing a modular unit having a full length mirror with a temperature control compartment fed by multiple spray-type dispersion nozzles and drained through a gravity flow outlet.

Fig. 10 is a perspective view of a presently preferred embodiment of the invention mounted on a showerhead pipe.

Fig. 11 is a close-up perspective view of a portion of the embodiment of Fig. 10 showing an end of the flex-arm connected to a T-junction designed for attachment to a showerhead pipe.

Fig. 12 is a close-up sectional view of a portion of the embodiment of Fig. 10 showing the intersection of the supply hose with a nozzle tube in the temperature control chamber.

Fig. 13 is a rear view of one version of the embodiment of Fig. 10 showing a back plate in position inside a frame against a nozzle tube loop.

Fig. 14 is a sectional view taken along the line 14-14 in Fig. 13.

Fig. 15 is a sectional view of a modified version of the frame of Fig. 14 wherein a single unitary product component is formed to include the front flange for holding the mirror and to include a junction boss for engaging the flex-arm.

Fig. 16 is a rear view of a different version of the embodiment of Fig. 10 showing a centrally located nozzle attached to an abbreviated back plate on the rear of a frame.

The present invention is an accessory shower mirror which can be installed in an existing shower, or alternatively is a permanent mirror which can be built into the shower. In both versions, the heated water comes from the same supply pipe which is connected to the shower head so that turning on the shower also turns on the heated water supply for the mirror, and turning off the shower head automatically turns off the water to the mirror. Additionally, no auxiliary pump energy is needed for the mirror water. Finally, as the temperature of the water coming out of the shower head increases, the temperature of the water supplied to the mirror increases at approximately the same rate to provide a built-in energy conservation control to avoid excessively heating the mirror beyond the minimum temperature needed to prevent steam from obscuring the mirror surface. Conversely this maximises the device's ability to prevent condensation from forming as the shower temperature increases the ambient steam temperature.

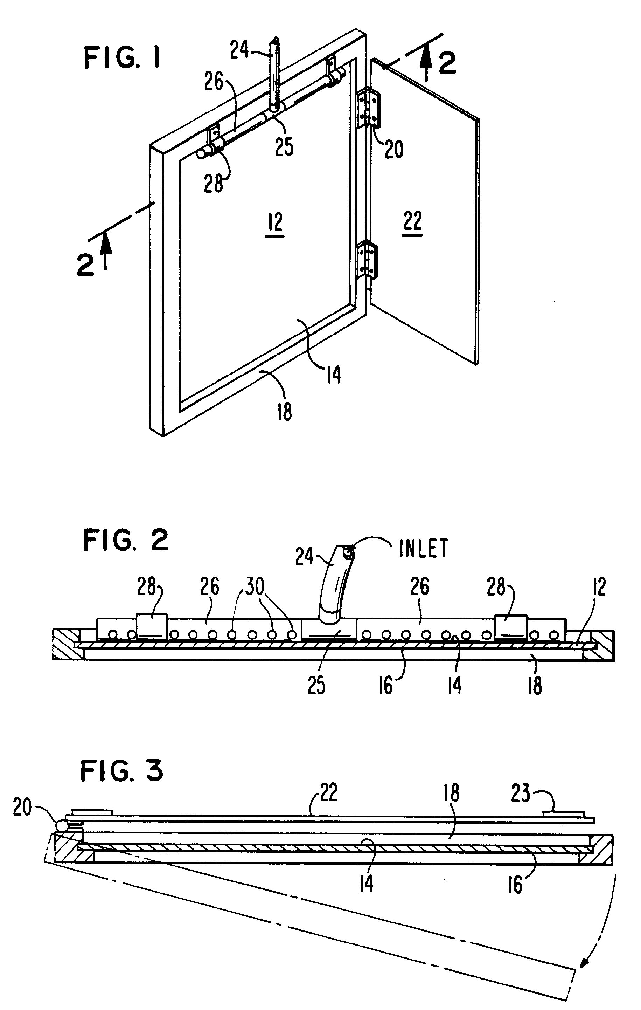

The shower mirrors of Figs. 1-9 do not embody the invention and the description of them has been included only to facilitate a clear understanding of the invention.

### Figs. 1--3

Figs. 1-3 show a shower mirror. An acrylic mirror 12 has a back side 14 and front reflecting surface 16 which is carried within a frame 18. The frame is designed so that its back side 14 is spaced away from the shower wall during use, thus providing a temperature control space behind the mirror. In some instances, it is desirable to partially enclose the temperature control space in order to provide a more efficient heat transfer chamber, but experimental prototypes provided dispersion of the heated water against the back side without having to employ the more sophisticated construction needed for completely enclosed temperature control chambers. Also, excessive water pressure that occurs as the enclosed chamber is filled may result in failure of the seals and/or splitting of the material.

In order to mount the unit on a shower wall so as to provide adjustable positioning of the mirror during use, hinges 20 connect frame 18 to a back plate 22 which has wall fasteners 23 (Fig. 3) for attachment to a shower wall. The use of a flexible joint (flex-joint), such as hinges or the like, provides the capability of manually bringing the mirror closer to the user so as to provide an enlarged image as well as ease of angular adjustment to facilitate different positioning for different-size persons within the shower stall, as well as to provide close-up viewing when necessary.

The material used for the mirror is not limited to acrylic, but other materials, such as polished chrome, safety glass, and the like can also be used. However, I found that a mirror having a relatively thin dimension, such as 1/8 inch (3.2 mm) provided quicker transfer to heat from the temperature control chamber through the back side of the mirror to the front side of the mirror. An acrylic mirror of 1/4 inch (6.3 mm) does work, but it takes a longer time to eliminate steam which may have already formed on the front surface of the mirror.

In order to increase the temperature of the mirror sufficiently to prevent condensation from forming on its viewing or front surface, heated water is distributed through an inlet tube 24, through a T-junction 25, to a diffuser bar 26 which extends along the top of the mirror along its back side 14, substantially the full width of the mirror. Brackets 28 hold diffuser bar 26 to frame 18 so that a plurality of apertures 30 face back side 14 to direct heated water against the back of the mirror where it runs down the mirror to its bottom edge. This unit can be mounted at any appropriate height and the hinged construction allows angular adjustment without interfering with the dispersion of heated water in the temperature control space. In that regard, the mirror frame and diffuser bar all move together as a single composite unit.

The mirror is not limited to the right/left hinged construction shown. On the contrary, various adjustable mounting devices, such as track, slides, ball joints, scissor mounts, pivots, and the like can be used in order to achieve different combinations of vertical, horizontal, back-to-front, and/or angular adjustments of the mirror relative to a viewer.

### Fig. 4

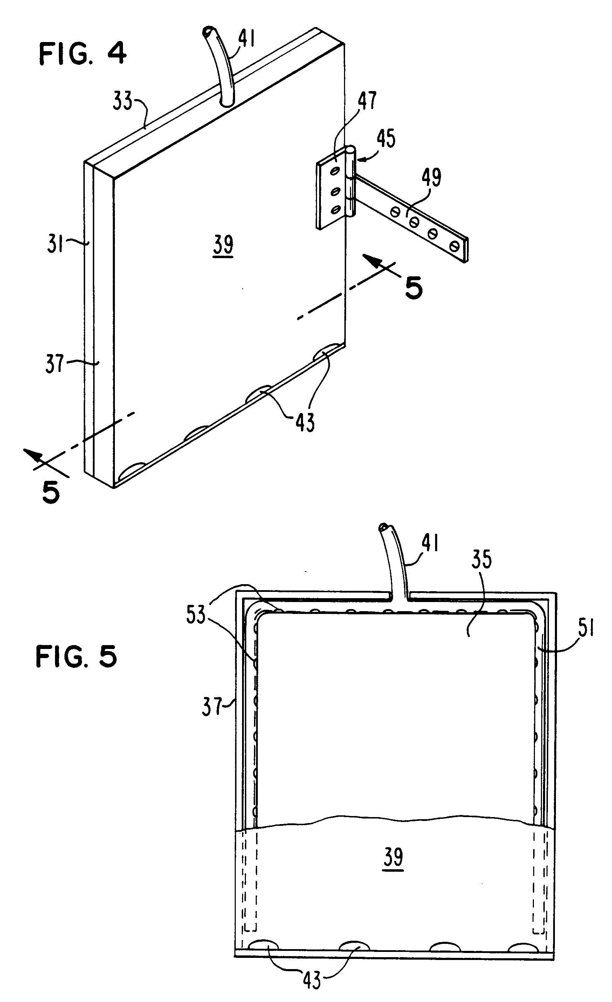

One variation of the mirror using a partially enclosed chamber is shown in the embodiment of Fig. 4 which incorporates a single flex-joint in order to achieve the necessary manual adjustability feature during use. A mirror 31 is mounted on the front of a rectangular frame 37 with a front face 33 facing away from the wall and a back surface 35 which, along with the frame, forms a heat transfer chamber. A back plate 39 is attached by suitable means to the frame to partially enclose the chamber, so that heated water passes through an inlet 41 into the chamber and is discharged from the chamber through gravity flow outlet holes 43 which are cut out from the bottom perimeter of the back plate. A synthetic hinge joint 45 serves as the flex-joint and is connected to the mirror unit through a moving bracket 47 attached to back plate 39 and is connected to the shower wall through a fixed bracket 49 which may be elongated for assuring secure fastening to the wall.

### Fig. 5

Where one desires continuously to drain the water from the heat transfer chamber before it accumulates to any significant degree, it was found that more efficient heat transfer was accomplished by providing a plurality of nozzle outlets spaced apart throughout the length and breadth of back surface 35. In this embodiment, as best shown in Fig. 5, a U-shaped diffuser loop 51 having a plurality of apertures 53 distributes the heated water throughout the heat transfer chamber. Thus it is not necessary for all of the heated water to be introduced at the top of the heat transfer chamber in order to achieve the desired dispersion of heated water on the back of the mirror and throughout the chamber.

### Fig. 6

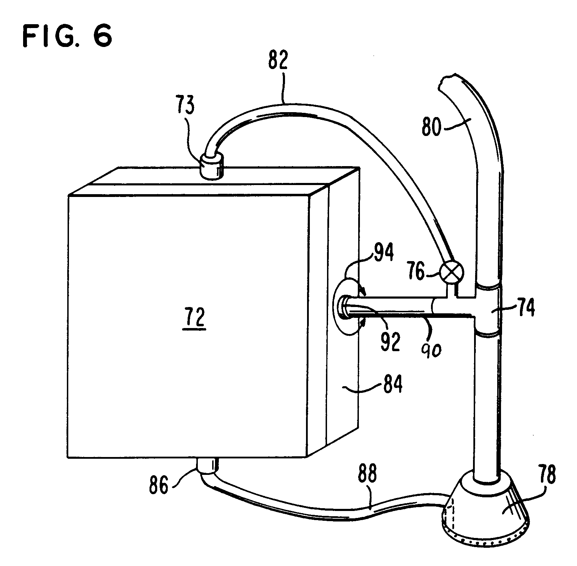

As shown in Fig. 6, direct mounting to the showerhead pipe as well as complete conservation of the water can be accomplished with a standard accessory unit which is usable with different forms of heat exchanger units. More specifically, the temperature of a mirror 72 is controlled by heated water supplied through an inlet 73 from a T-fitting 74 which has a control valve 76 (on/off or variable flow). Water coming to a showerhead 78 from a showerhead pipe 80 passes along a flexible hose 82 through a dispensing nozzle (not shown) into a heat exchanger unit 84 to allow transfer of heat, either directly or indirectly, from the water to mirror 72. The water is then routed through outlet 86 and then back through a flexible tube 88 to shower head 78 for distribution into the shower stall along with the rest of the shower water.

Mirror 72 is held in suspended position by a support arm 90 which connects at one end to T-fitting 74 and at the other end through a rotary flex-joint 92 which allows the mirror to be manually adjusted about a horizontal axis (as shown by arrow 94) during use without interfering with the flow of water to and from heat exchanger unit 84 behind mirror 72.

Thus readers will understand that various forms of mounting arms can be used in conjunction with various types of heat transfer methods and devices behind a shower mirror in order to facilitate the efficient and immediate transfer of heat energy from the heated water to the shower mirror, and without interfering with the manual adjustability of the mirror position. Also, by leaving the front of the mirror free of any protruding devices, it is possible manually to wipe off any shower droplets which may be inadvertently splattered onto the surface of the mirror.

### Figs. 7-8

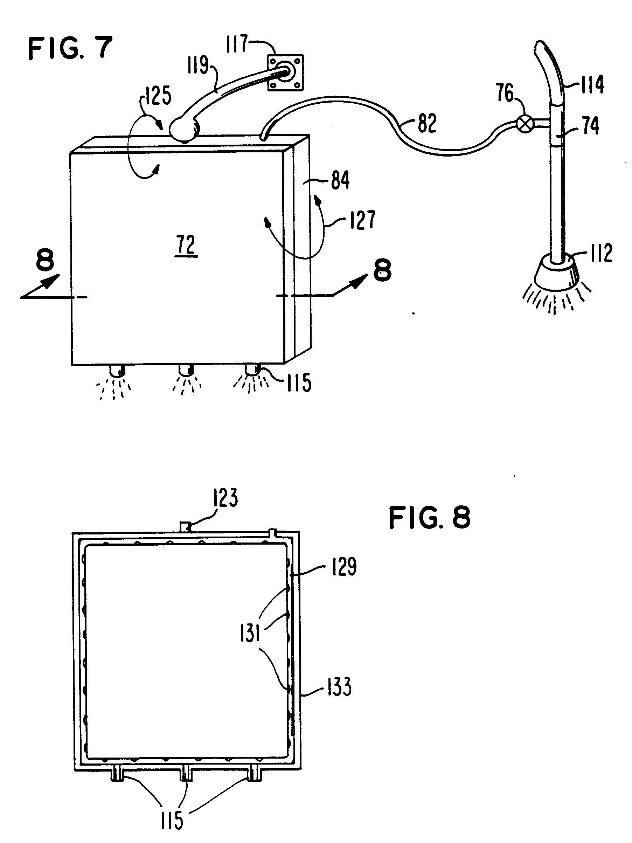

In some instances it is advisable to avoid having excessive weight on the showerhead pipe while at the same time having the wide range of adjustability which results from having the mirror mounted in a position displaced a substantial distance away from the shower wall. Thus to provide a relatively permanent installation without limiting adjustability, the embodiment of Figs. 7-8 includes a conventional showerhead 112 which is supplied through supply pipe 114. A conventional T-fitting 74 provides water directly from the supply pipe through a valve 76, as previously described, to deliver heated water through flexible hose 82 to heat exchanger unit 84 behind mirror 72. Outlet drains 115 at the bottom of the heat exchanger unit allow gravity discharge of the water. In this version, a permanently installed wall bracket 117 carries a rigid arm 119 which connects through a ball joint to a hanger 123 which is attached to the heat exchanger unit behind the mirror. Such an installation places the mirror substantially away from the shower wall and thereby allows manual manipulation of the mirror in directions around an imaginary horizontal axis, as shown by arrow 125, and also in directions around an imaginary vertical axis, as shown by arrow 127. In order to assure thorough dispersion of the heated water behind the mirror in the heat exchanger, a complete-loop diffuser hose 129 extends around the entire perimeter of the back of the mirror and includes inwardly directed apertures 131 periodically spaced along the hose. To avoid any undue accumulation of water buildup, additional drainage or ventilation holes 133 may be provided.

### Fig. 9

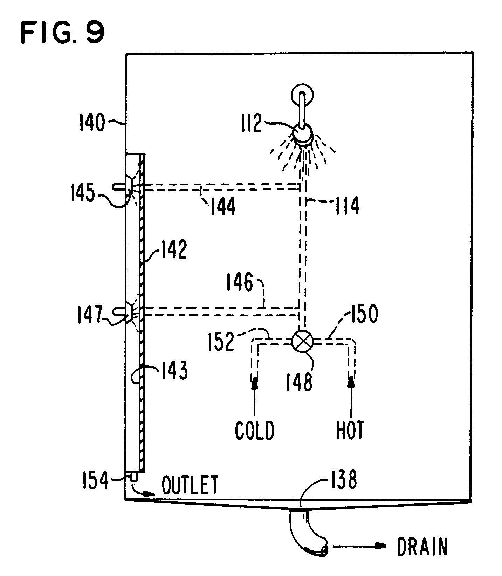

The permanently installed version of Fig. 9 shows an embodiment which features a full-length mirror without having the strain problems of a completely-enclosed, water-filled heat transfer chamber. More specifically, a modified shower enclosure 140 carries a full-length mirror 142 mounted on the back shower wall so that back surface 143 of the mirror receives heated water sprayed directly against such back surface from upper and lower dispersion nozzles 145 and 147, which are respectively supplied by upper and lower auxiliary supply pipes 144 and 146, connected to main supply pipe 114. In this simplified piping system, the correct mix of hot and cold water from supply pipes 150 and 152 provided by control valve 148. The heat transfer chamber fills with hot water and spray or mist from the two nozzles so that the mirror is heated directly by the water streaming down its back side, as well as indirectly by the ambient air, mist, and spray mixture in the heat transfer compartment. The residual water is fully discharged by gravity flow through outlet 154 onto the shower floor for ultimate disposal down drain 138.

### Fig. 10

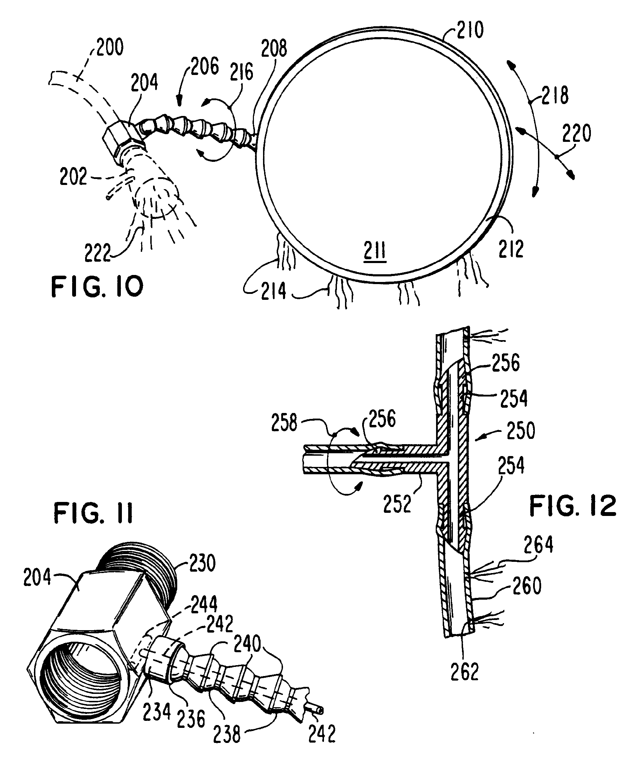

As shown in Fig. 10, the invention is adaptable for installation directly on a conventional showerhead pipe 200 at a point above showerhead 202. In that regard, a T-junction 204 allows some of the showerhead water to be diverted through a flex-arm 206 to a temperature control space behind a circular mirror 211. A junction boss 208 interconnects flex-arm 206 to a frame 210 which has a front flange 212 which overlies the front edge of the mirror and thus holds mirror 211 securely in place. Water 214 is drained by gravity flow from the temperature control space.

A wide range of positions are possible with this circular embodiment. For example, flex-arm 206 permits rotary movement, as shown by arrow 216, as well as vertical movement, as shown by arrow 218, and horizontal movement, as shown by arrow 220. All of these manual manipulations can be accomplished during use while the showerhead is dispensing water 222, and since the showerhead pipe supplies the heated water to the temperature control space at the same time, the mirror is kept condensation free despite its orientation. During non-use, the mirror can be rotated to face the wall, thereby avoiding the buildup of soapy water stains and the like.

It is possible to make new shower installations with the circular condensation-free mirror permanently installed, or alternatively it can be installed as an accessory to an old shower. There is no horizontal or vertical space requirement, so that it can be installed wherever space allows, whether it is on the right, the left, or above or below the showerhead, in a combination tub and shower or a shower stall.

### Fig 11

Although it is possible to use standard T-junction hardware to make the connection with the showerhead pipe, in the preferred form a customized T-junction 204 is used (Fig 11). It includes the usual male-threaded end 230 and female-threaded end 232, but has a modified central leg 234 which has an enlarged seat 236 for journaling a ball joint 238 of an adjacent link in the flex-arm. The opposite end of each link forms a similar enlarged seat 240 for receiving the next ball joint of the next link, and so forth, all the way up the flex-arm. While the invention is not limited to the flex-arm shown, it was found that such a flex-arm (sold under the Trade Mark LOC-LINE by Lockwood Products, Inc., Lake Oswego, OR) provided both pivotal movement of each link in any lateral direction relative to the adjacent link, as well as rotary movement of each link relative to the adjacent link, thereby enabling the mirror to be pivoted for adjustment of angular orientation in the vertical and horizontal directions. Translational movement of the mirror can also be achieved without changing the angular orientation, thus enabling the mirror to be moved back and forth, up and down, and from right to left. The friction engagement between adjacent links assures that the flex-arm and the mirror attached thereto will remain in position until it becomes necessary to manually manipulate it to a new position. This is achieved without any additional support arms from the floor of wall or ceiling of the shower enclosure, thus making the mirror self supporting in a suspended position above the floor.

Moreover, the central passage in the flex-arm can supply water from the showerhead pipe to the chamber behind the mirror. In the illustrated form, a separate supply hose 242 is inserted through the passage in order to carry water from T-joint 204 through flex-arm 206 to a nozzle unit in the control space. One advantage of a separate supply hose 242 is that if the adjacent links of the flex-arm are pulled apart, the mirror will not fall to the floor since it is still supported by the supply hose. In order to achieve this additional benefit, the end of supply hose 242 in T-joint 204 is held there such as by a tight friction fit, or alternatively by a splayed end, such as 244, which can't be pulled through the central passage in the flex-arm.

### Fig. 12

The other end of supply hose 242 is interconnected through a T-intersection 250 (Fig. 12) which has a central leg 252 and two opposite lateral legs 254. Each leg has a one-way stop ridge 256 to hold any hose or tube in position for communication with the hollow axis of the T-intersection. This junction allows rotation of the supply hose relative to the T-intersection, as shown by arrow 258, without having the hose become disengaged from the T-intersection. This is important so that water flow continues uninterrupted when the mirror is rotated around the axis of the flex-arm, as previously described. A nozzle tube 260 is connected between lateral legs 254 and has apertures 262 for directing water into the temperature control space and against the back of mirror 211.

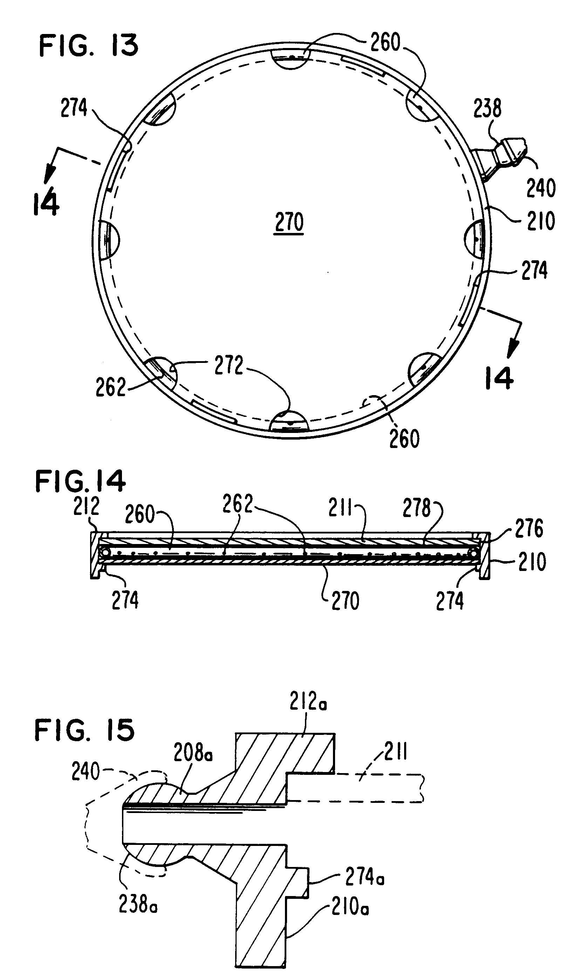

For manufacturing purposes, I prefer to use the flex-arm of Fig 11 with ball joints 238 facing toward T-joint 204. This enables the composite component of Fig 15 to be molded of less expensive plastic since its seats 236 and 240 which require a higher quality, expensive plastic for achieving proper ball joint linkage.

### Fig 13

Although there are a number of different ways for partially enclosing the temperature control chamber in order to make the heat transfer from the heated water to the front face of the mirror more efficient, the illustrated embodiment includes a back plate 270 (Fig 13) which fits inside the back of frame 210. Periodic cutouts 272 around the perimeter of back plate 270 provide drain holes capable of discharging water from the temperature control chamber, notwithstanding the orientation of the mirror during use. In other words, whatever change in position is made, there will almost always be a downwardly located drain hole for preventing excessive accumulation of water. If the water does begin to build up in the chamber, the rest of the drain holes will provide additional discharge paths.

### Fig 14

In order to hold back plate 270 in position, the frame includes shoulders 274 which extend inwardly from the frame. Thus the back plate is slightly flexed to fit inside the frame forward of the shoulders, such that when the back plate returns to its normally flat shape, the shoulders hold it against nozzle tube 260 (Fig 14). This has the additional advantage of causing the nozzle tube to serve as a gasket, preventing the leakage of water through joint 276 out to the front surface of the mirror. This eliminates the need of any sealing, caulking, or bonding adhesive. In other words, even though the heated water in the chamber is circulated for direct contact against back surface 278 of the mirror, back plate 270 provides adequate restraint against the nozzle tube and the mirror thereunder to hold them in secure position against front flange 212 of the frame. By making the diameter of the loop of nozzle tube 260 slightly less than the inside diameter of the frame, and by making the nozzle tube of slightly resilient material, the nozzle tube will be slightly compressed by the pressure of the back plate, thus creating the gasket-like function without adding any additional parts or materials.

In order to assure that apertures 262 provide free flow of the heated water into the temperature control chamber, such apertures are preferably made by a laser beam, rather than by mechanical punching. It is believed that holes of approximately 381 µm (15 mils) in diameter made by laser beam technology eliminate any hose material residue which might otherwise clog the apertures. Even if their direction is not toward the back of the mirror, the water will be deflected by the back plate to mix with air and/or rebound onto the back surface of the mirror and thereby achieve the heat transfer to the mirror panel, which is the primary purpose of the device.

### Fig 15

The simplicity of the invention allows the use of plastic products made by the injection molded process; this assures high quality products with a minimal number of parts. Thus, as shown in the sectional view of Fig 15, it is possible and desirable to make flange 212a, junction boss 208a, shoulder 274a, and frame 210a as a single unitary component. In this version, shoulder 274a may be formed as a continuous strip all the way around the inside wall of the frame, rather than merely as separate shoulders, as shown in Fig 13.

Although not required, I prefer to use shatterproof non-distorting acrylic material for the mirror, and to use engineering grade acetal copolymer for the frame, T-joint, and flex-arm in order to assure the safety and non-corrosion of the device during long periods of exposure to water.

### Fig 16

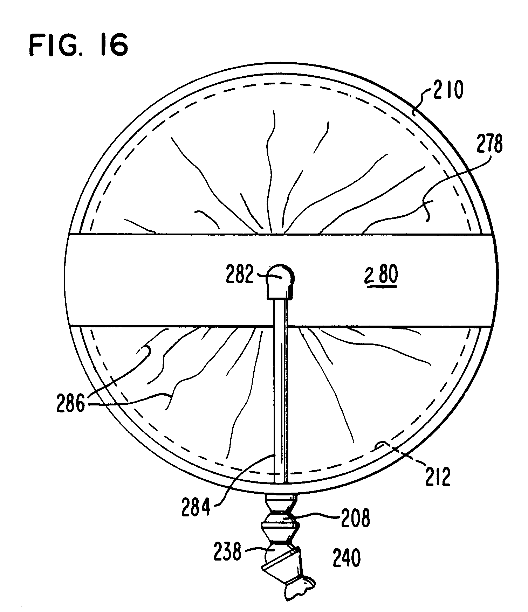

Where a simpler, less expensive device is desired, the construction features of Fig 16 can be employed. An abbreviated back strip 280 is attached on the back of frame 210 with a centrally located hole for receiving a spray nozzle 282 which is supplied with heated water through a tube 284 which communicates with the supply hose (not shown) in the flex-arm. In this embodiment, water 286 sprays radially outwardly to contact the back of the mirror directly and drain out through the open back of the heat transfer compartment.

### Summary, Ramifications, And Scope

The reader will thus see that I have provided a shower mirror which will not fog, which can be easily adjusted to any position, and which will snap apart in case of trauma.

While several specific embodiments have been shown, other variations in the spray nozzle construction and location, the formation of boundaries for the heat transfer compartment, and the drainage of the water away from the bottom of the space behind the mirror can be made to provide equivalent structures. There will be other changes, modifications and substitutions which will be evident to those skilled in the art.

## Claims

1. A mirror assembly for use in a shower enclosure having a supply pipe (200) connected to a water-dispensing showerhead (202) comprising:
a mirror (211);
a frame (210,212) having a back plate (270,280) for holding said mirror and defining a partially enclosed chamber adjacent the rear surface (278) of said mirror, an elongated arm (206), one end of which is attached to said frame, the other end of which includes attachment means (204) for attaching said arm to said showerhead supply pipe, said arm carrying the frame and the mirror and being adjustable to vary the position of the mirror,
and supply means (200), comprising a central passage in said elongated arm, for supplying heated water from said showerhead pipe (200) to said enclosed chamber and directing said water against the rear surface of said mirror so as to heat said mirror and thereby prevent it from fogging, characterised in that said arm (206) is flexible, and bendable, yet will remain stably in any position to which it is bent, such that when said other end of said arm is attached to said showerhead supply pipe, said mirror (211) can be positioned stably in any position (206,218,220) within a range of positions with respect to said showerhead, said supply means further comprises a flexible inner tube (242) positioned in said central passage, and said frame comprises drain means (272) for allowing heated water (214,286) to drain away from said mirror by gravity after heating said mirror.

2. The mirror assembly of claim 1, wherein said elongated arm (206) has a plurality of interconnected rigid sections (238, 240) and said central passage extends through said interconnected sections.

3. The mirror assembly of claim 1 or 2, wherein said mirror (211) is circular in shape and said water is directed against said rear surface (278) of said mirror by a hose (260) bent to a circular shape to conform to the shape of said mirror, said flexible inner tube (242) being connected to said hose by a T-fitting so that said hose forms an endless loop which includes said T-fitting.

4. The mirror assembly of claim 1 or 2, further including:
a junction extending between said frame and said mirror; and
nozzle means communicating with said flexible inner tube (242) and located in a temperature control space defined by the partially enclosed chamber, said nozzle means being arranged to dispense water into said temperature control space and against said rear surface of said mirror, said nozzle means including a hose (260) extending along said junction and arranged to spray heated water radially inward against the back surface (278) of said mirror (211).

5. The mirror assembly of any preceding claim, wherein said arm (206) includes at least one separable joint for allowing said arm to separate in case of trauma thereto.

6. The mirror assembly of claim 5, wherein said arm (206) has at least two separable joints.

7. The mirror assembly of any preceding claim, wherein said arm (206) includes a rotary joint so that it can be pivoted such that said front reflecting face of said mirror (211) can be turned toward said wall during non-use.

8. The mirror assembly of any preceding claim, wherein said attachment means comprises a T-fitting (204) arranged to enable said arm (206) to be attached to a showerhead pipe.

9. The mirror assembly of claim 8, wherein said attachment means comprising said T-fitting (204) is arranged to be mounted between said showerhead pipe (200) and a showerhead (202) so as to convey shower water from said showerhead pipe to said showerhead, a proximal end of said elongated arm (206) being open and extending into the path of said shower water within said attachment means.

10. The mirror assembly of any of claims 4 to 9, wherein said nozzle means includes a plurality of dispersion outlets spaced along at least one edge of said mirror.

11. The mirror assembly of any of claims 4 to 9, wherein said mirror (211) is circular and said nozzle means includes a plurality of dispersion outlets (272) located around the periphery of said mirror.

12. The mirror assembly of any of claims 4 to 9, wherein said nozzle means includes a spray outlet located in the central portion of the back surface (278) of said mirror (211) for spraying heated water radially outwardly in said temperature control space.

13. The mirror assembly of any of claims 4 to 12, wherein said drain means comprises an outlet (272) positioned at the lower end of said temperature control space.

14. The mirror assembly of any of claims 4 to 13, wherein said frame (210) includes a flange (212) overlying the peripheral portion of the front reflecting face of said mirror (211).

15. The mirror assembly of any of claims 4 to 14, including restraint means for holding said hose (260) against said junction between said frame (210) and said mirror (211) to act as a gasket to prevent heated water from leaking through said junction to said front reflecting face of said mirror.

16. The mirror assembly of claim 15, further including a back plate at least partially enclosing said temperature control space to provide more efficient heat transfer from said heated water dispersed from said hose (260) to said back face of said mirror (211).

17. The mirror assembly of claim 16, wherein said restraint means includes said back plate (270).

18. The mirror assembly of claim 17, wherein said restraint means further includes a shoulder (274) on said frame (210) which abuts said back plate to hold it in restraining position against said hose (260).

19. The mirror assembly of any preceding claim, wherein said arm (206) is a flexible arm which includes a plurality of ball and socket joints which move relative to each other to allow both translational and pivotal movements of said mirror (211).

20. The mirror assembly of claim 19, wherein said ball and socket joints are separable so that said flex-arm will separate in case of trauma to said mirror (211).

21. The mirror assembly of claim 19, further including a junction between said hose and said nozzle means so as to allow relative movement therebetween when said mirror (211) is rotated relative to said arm (206).

## Patentansprüche

1. Spiegelanordnung für die Verwendung in einem Duschabteil, das eine Zuflußrohrleitung (200) besitzt, die mit einem Wasserverteilungsduschkopf (202) verbunden ist, mit:
einem Spiegel (211);
einem Rahmen (210,212), der eine Rückplatte (270,280) zum Halten des Spiegels und zum Bilden einer teilweise umschlossenen Kammer angrenzend an die rückseitige Oberfläche (278) des Spiegels, einen langgestreckten Arm (206), dessen eines Ende mit dem Rahmen verbunden ist, wobei dessen anderes Ende Befestigungseinrichtungen (204) zum Befestigen des Arms an dem Duschkopf-Zuflußrohr umfaßt, wobei der Arm den Rahmen und den Spiegel trägt und einstellbar ist, um die Stellung des Spiegels zu variieren, und
einer Versorgungseinrichtung (200), die einen Mittendurchgangsweg in dem langgestreckten Arm zur Zufuhr von aufgeheiztem Wasser von der Duschkopf-Rohrleitung (200) zu der umschlossenen Kammer und zum Richten des Wassers gegen die rückseitige Oberfläche des Spiegels so, um den Spiegel zu beheizen und dadurch diesen gegen ein Beschlagen zu schützen aufweist, dadurch gekennzeichnet, daß der Arm (206) flexibel und biegbar ist, der stabil in irgendeiner Stellung verbleibt, in die er gebogen ist, derart, daß, wenn das andere Ende des Arms an der Duschkopf-Rohrleitung befestigt ist, der Spiegel (211) stabil in irgendeiner Stellung (206,218,220) innerhalb eines Bereichs von Stellungen hinsichtlich des Duschkopfs positioniert werden kann, wobei die Zufuhreinrichtung weiterhin ein flexibles, inneres Rohr (242) aufweist, das in dem Mittendurchgangsweg positioniert ist, und wobei der Rahmen eine Entwässerungseinrichtung (272) aufweist, um dem beheizten Wasser (214,286) zu ermöglichen, von dem Spiegel unter Schwerkraft nach dem Beheizen des Spiegels abzulaufen.

2. Spiegelanordnung nach Anspruch 1, wobei der langgestreckte Arm (206) eine Mehrzahl von miteinander verbundenen, steifen Abschnitten (238,240) besitzt und wobei sich der Mittendurchgangsweg durch die miteinander verbundenen Abschnitte erstreckt.

3. Spiegelanordnung nach Anspruch 1 oder 2, wobei der Spiegel (221) kreisförmig in seiner Form ist und das Wasser gegen die hintere Oberfläche (278) des Spiegels durch einen Schlauch (260) gerichtet wird, der in einer kreisförmigen Form gebogen ist, um sich der Form des Spiegels anzupassen, wobei das flexible, innere Rohr (242) mit dem Schlauch über ein T-Anschlußstück derart verbunden ist, daß der Schlauch eine endlose Schleife bildet, die das T-Anschlußstück umfaßt.

4. Spiegelanordnung nach Anspruch 1 oder 2, die weiterhin umfaßt:
eine Verbindung, die sich zwischen dem Rahmen und dem Spiegel erstreckt; und
eine Düseneinrichtung, die mit dem flexiblen, inneren Rohr (242) in Verbindung steht und in einem Temperaturkontrollraum, der durch die teilweise umschlossene Kammer gebildet wird, angeordnet ist, wobei die Düseneinrichtung so angeordnet ist, um Wasser in dem Temperaturkontrollraum und gegen die hintere Oberfläche des Spiegels zu richten, wobei die Düseneinrichtung einen Schlauch (260) umfaßt, der sich entlang der Verbindung erstreckt und so angeordnet ist, um beheiztes Wasser radial nach innen gegen die Rückfläche (278) des Spiegels (211) zu richten.

5. Spiegelanordnung nach einem der vorhergehenden Ansprüche, wobei der Arm (206) mindestens eine trennbare Verbindung umfaßt, um zu ermöglichen, daß der Arm im Fall einer Beschädigung getrennt werden kann.

6. Spiegelanordnung nach Anspruch 5, wobei der Arm (206) mindestens zwei trennbare Verbindungen aufweist.

7. Spiegelanordnung nach einem der vorhergehenden Ansprüche, wobei der Arm (206) ein Drehgelenk umfaßt derart, daß er so geschwenkt werden kann, daß die frontseitige Reflektionsfläche des Spiegels (211) zu der Wand während der Nichtnutzung gedreht werden kann.

8. Spiegelanordnung nach einem der vorhergehenden Ansprüche, wobei die Verbindungseinrichtung ein T-Anschlußstück (204) aufweist, das so angeordnet ist, um zu ermöglichen, daß der Arm (206) an einer Duschkopf-Rohrleitung befestigt werden kann.

9. Spiegelanordnung nach Anspruch 8, wobei die Befestigungseinrichtung, die das T-Anschlußstück (204) aufweist, so angeordnet ist, daß sie zwischen der Duschkopf-Rohrleitung (200) und einem Duschkopf (202) befestigt werden kann, um Duschwasser von der Duschkopf-Rohrleitung zu dem Duschkopf zu befördern, wobei ein in der Nähe liegendes Ende des langgestreckten Arms (209) offen ist und sich in den Durchgangsweg des Duschwassers innerhalb der Befestigungseinrichtung erstreckt.

10. Spiegelanordnung nach einem der Ansprüche 4 bis 9, wobei die Düseneinrichtung eine Mehrzahl von Verteilungsauslässen umfaßt, die entlang mindestens einer Kante des Spiegels beabstandet angeordnet sind.

11. Spiegelanordnung nach einem der Ansprüche 4 bis 9, wobei der Spiegel (211) kreisförmig ist und die Düseneinrichtung eine Mehrzahl von Verteilungsauslässen (272) umfaßt, die um den Umfang des Spiegels herum angeordnet sind.

12. Spiegelanordnung nach einem der Ansprüche 4 bis 9, wobei die Düseneinrichtung einen Sprühauslaß umfaßt, der in dem Mittenbereich der Rückfläche (278) des Spiegels (211) zum Versprühen von beheiztem Wasser radial nach außen in den Temperaturkontrollraum angeordnet ist.

13. Spiegelanordnung nach einem der Ansprüche 4 bis 12, wobei die Entwässerungseinrichtung einen Auslaß (272) aufweist, der an dem unteren Ende des Temperaturkontrollraums positioniert ist.

14. Spiegelanordnung nach einem der Ansprüche 4 bis 13, wobei der Rahmen (210) einen Flansch (212) umfaßt, der den Umfangsbereich der vorderen, reflektierenden Fläche des Spiegels (211) überlegt.

15. Spiegelanordnung nach einem der Ansprüche 4 bis 14, die eine Rückhalteeinrichtung zum Halten des Schlauchs (260) gegen die Verbindung zwischen dem Rahmen (210) und dem Spiegel (211) umfaßt, um als eine Dichtung zu wirken, um zu verhindern, daß beheiztes Wasser durch die Verbindung zu der vorderen, reflektierenden Fläche des Spiegels hindurchdringt.

16. Spiegelanordnung nach Anspruch 15, die weiterhin eine Rückplatte umfaßt, die mindestens teilweise den Temperaturkontrollraum umschließt, um eine effektivere Wärmeübertragung von dem beheizten Wasser, das von dem Schlauch (260) verteilt wird, zu der Rückfläche des Spiegels (211) zu schaffen.

17. Spiegelanordnung nach Anspruch 16, wobei die Rückhalteeinrichtung die Rückplatte (270) umfaßt.

18. Spiegelanordnung nach Anspruch 17, wobei die Rückhalteeinrichtung weiterhin eine Schulter (274) an dem Rahmen (210) umfaßt, der gegen die Rückplatte anstößt, um sie in einer Rückhaltestellung gegen den Schlauch (260) zu halten.

19. Spiegelanordnung nach einem der vorhergehenden Ansprüche, wobei der Arm (206) ein flexibler Arm ist, der eine Mehrzahl von Kugelgelenken besitzt, die relativ zueinander bewegbar sind, um sowohl eine translatorische als auch schwenkbare Bewegung des Spiegels (211) zuzulassen.

20. Spiegelanordnung nach Anspruch 19, wobei die Kugelgelenke voneinander trennbar sind, so daß der flexible Arm im Fall einer Beschädigung des Spiegels (211) getrennt wird.

21. Spiegelanordnung nach Anspruch 19, die weiterhin eine Verbindung zwischen dem Schlauch und der Düseneinrichtung umfaßt, um eine relative Bewegung dazwischen zu ermöglichen, wenn der Spiegel (211) relativ zu dem Arm (206) gedreht wird.

## Revendications

1. Ensemble à miroir destiné à être utilisé dans une enceinte de douche ayant un tube (200) d'alimentation raccordé à une tête (202) de douche qui distribue de l'eau, comprenant :
un miroir (211),
un châssis (210, 212) ayant une plaque arrière (270, 280), destiné à supporter le miroir et délimitant une chambre partiellement fermée adjacente à la surface arrière (278) du miroir, un bras allongé (206) dont une première extrémité est fixée au châssis et l'autre extrémité comprend un dispositif (204) de fixation du bras au tube d'alimentation de la tête de douche, le bras portant le châssis et le miroir et étant ajustable afin que la position du miroir varie, et
un dispositif (200) d'alimentation qui comprend un passage central placé dans le bras allongé et destiné à transmettre de l'eau chaude du tube (200) de la tête de douche à la chambre fermée et à diriger l'eau contre la surface arrière du miroir afin que le miroir soit chauffé et que de la buée ne puisse pas se former, caractérisé en ce que le bras (206) est flexible et peut fléchir, tout en restant de manière stable dans une position quelconque vers laquelle il est déplacé, si bien que, lorsque l'autre extrémité du bras est fixée au tube d'alimentation de la tête de douche, le miroir (211) peut être placé en position stable quelconque (206, 218, 220) dans toute une gamme de positions par rapport à la tête de douche, le dispositif d'alimentation comportant en outre un tube interne souple (242) placé dans le passage central, le châssis comprenant un dispositif (272) d'évacuation destiné à permettre à l'eau chaude (214, 286) d'être évacuée du miroir sous l'action de la pesanteur après le chauffage du miroir.

2. Ensemble à miroir selon la revendication 1, dans lequel le bras allongé (206) a plusieurs tronçons rigides interconnectés (238, 240), et le passage central est formé dans les tronçons interconnectés.

3. Ensemble à miroir selon la revendication 1 ou 2, dans lequel le miroir (211) a une forme circulaire et l'eau est dirigée contre la surface arrière (278) du miroir par un tube souple (260) courbé à une configuration circulaire correspondant à la configuration du miroir, le tube interne souple (242) étant raccordé au tube souple par un embout en T afin que le tube forme une boucle sans fin qui comprend l'embout en T.

4. Ensemble à miroir selon la revendication 1 ou 2, comprenant en outre :
un raccord placé entre le châssis et le miroir, et
un dispositif à buse communiquant avec le tube interne souple (242) et placé dans un espace de réglage de température délimité par la chambre partiellement fermée, le dispositif à buse étant destiné à distribuer l'eau dans l'espace de réglage de température et contre la surface arrière du miroir, le dispositif à buse comprenant un tube souple (260) disposé le long de la jonction et destiné à pulvériser de l'eau chaude radialement vers l'intérieur contre la face arrière (278) du miroir (211).

5. Ensemble à miroir selon l'une quelconque des revendications précédentes, dans lequel le bras (206) comporte au moins un joint séparable destiné à permettre la séparation du bras en cas de fracture.

6. Ensemble à miroir selon la revendication 5, dans lequel le bras (206) a au moins deux joints séparables.

7. Ensemble à miroir selon l'une quelconque des revendications précédentes, dans lequel le bras (206) comprend un joint rotatif afin qu'il puisse pivoter de manière que la surface réfléchissante avant du miroir (211) puisse être tournée vers le mur lorsque celui-ci n'est pas utilisé.

8. Ensemble à miroir selon l'une quelconque des revendications précédentes, dans lequel le dispositif de fixation comprend un embout en T (204) disposé afin qu'il permette la fixation du bras (206) à un tube de tête de douche.

9. Ensemble à miroir selon la revendication 8, dans lequel le dispositif de fixation qui comprend l'embout en T (204) est destiné à être monté entre le tube (200) de tête de douche et une tête de douche (202), afin qu'il transporte l'eau de douche du tube à la tête de douche, une extrémité interne du bras allongé (206) étant ouverte et étant disposée sur le trajet de l'eau de la douche à l'intérieur du dispositif de fixation.

10. Ensemble à miroir selon l'une des revendications 4 à 9, dans lequel le dispositif à buse comprend plusieurs sorties de dispersion espacées le long d'un bord au moins du miroir.

11. Ensemble à miroir selon l'une des revendications 4 à 9, dans lequel le miroir (211) est circulaire et le dispositif à buse comprend plusieurs sorties de dispersion (272) placées à la périphérie du miroir.

12. Ensemble à miroir selon l'une des revendications 4 à 9, dans lequel le dispositif à buse comprend une sortie de pulvérisation placée dans la partie centrale de la surface arrière (278) du miroir (211) pour la pulvérisation d'eau chaude radialement vers l'extérieur dans l'espace de réglage de température.

13. Ensemble à miroir selon l'une des revendications 4 à 12, dans lequel le dispositif d'évacuation comporte une sortie (272) placée à l'extrémité inférieure de l'espace de réglage de température.

14. Ensemble à miroir selon l'une des revendications 4 à 13, dans lequel le châssis (210) a un flasque (212) recouvrant la partie périphérique de la face réfléchissante avant du miroir (211).

15. Ensemble à miroir selon l'une des revendications 4 à 14, comprenant un dispositif de retenue destiné à maintenir le tube souple (260) contre le raccord du châssis (210) et du miroir (211) afin qu'il forme une garniture empêchant les fuites d'eau chaude par le raccord vers la face réfléchissante avant du miroir.

16. Ensemble à miroir selon la revendication 15, comprenant en outre une plaque arrière entourant au moins partiellement l'espace de réglage de température pour assurer un transfert plus efficace de chaleur de l'eau chaude dispersée par le tube souple (260) à la face arrière du miroir (211).

17. Ensemble à miroir selon la revendication 16, dans lequel le dispositif de retenue comprend la plaque arrière (270).

18. Ensemble à miroir selon la revendication 17, dans lequel le dispositif de retenue comporte en outre un épaulement (274) placé sur le châssis (210) et qui est en butée contre la plaque arrière afin que celle-ci soit maintenue en position de retenue contre le tube souple (260).

19. Ensemble à miroir selon l'une quelconque des revendications précédentes, dans lequel le bras (206) est un bras flexible qui comprend plusieurs joints à rotule qui se déplacent les uns par rapport aux autres afin qu'ils permettent à la fois des mouvements de translation et de pivotement du miroir (211).

20. Ensemble à miroir selon la revendication 19, dans lequel les joints à rotule sont séparables afin que le bras flexible puisse se séparer en cas de détérioration du miroir (211).

21. Ensemble à miroir selon la revendication 19, comprenant en outre un raccord placé entre le tube souple et le dispositif à buse et permettant un déplacement relatif de ceux-ci lorsque le miroir (211) est tourné par rapport au bras (206).
